# EUROPEAN PATENT SPECIFICATION

(11) **EP 3 200 581 B1**
(45) Date of publication and mention of the grant of the patent: **06.11.2019**
(21) Application number: 15794327.5
(22) Date of filing: 16.09.2015
(51) Int. Cl.: A01K 41/00, A01K 41/06, A01K 43/00

(54) **FINAL HATCHING HOLDER FOR USE IN A METHOD OF INCUBATING HATCHING EGGS, AND ASSOCIATED METHOD**
ENDSCHLÜPFHALTER ZUR VERWENDUNG IN EINEM VERFAHREN ZUR INKUBATION VON BRUTEIERN UND ZUGEHÖRIGES VERFAHREN
SUPPORT D'INCUBATION FINALE DESTINÉ À UN PROCÉDÉ D'INCUBATION D'OEUFS À COUVER ET PROCÉDÉ ASSOCIÉ

(30) Priority: 03.10.2014 NL 2013569
(43) Date of publication of application: 09.08.2017
(73) Proprietor: Agri-Invent B.V., 5405 AC Uden (NL)
(72) Inventor: DE LOUW, Frank Josephus Maria, 5405 AC Uden (NL)
(74) Representative: Algemeen Octrooi- en Merkenbureau B.V.
(86) International application number: PCT/NL2015/050638
(87) International publication number: WO 2016/053088

(56) References cited:
- CN-U- 203 372 630
- NL-C2- 1 016 479
- US-A- 5 146 871
- US-A- 6 129 505
- US-A1- 2007 245 973

## Description

The invention relates to a final hatching holder for use in a method of incubating hatching eggs.

Hatching eggs are eggs that are used for the production of baby chicks. Said hatching eggs are normally produced by breeders who keep hens and cocks in a chicken run. The hens are fertilized therein, so that in the end the nucleus grows into an embryo and is born as a (one-day) chick.

The method now in use for incubating hatching eggs involves a transport of the hatching eggs to a hatchery. The hatching eggs are put in a pre-hatching space where they are exposed to a conditioned climate. After a certain period, for example 18 days in the case of fertilized chicken eggs, the hatching eggs can be and/or are inspected in order to ascertain whether or not a viable embryo is present. Fertilized eggs are separated from non-fertilized eggs and/or from those whose nuclei have died or were not viable. The fertilized eggs are subsequently transferred to a final hatching machine so as to undergo a final hatching process. The object of the final hatching is to allow the chicks to emerge in a conditioned manner. The known final hatching machine is for this purpose provided with conditioning means, for example for conditioning the temperature, air movement and/or air humidity in the final hatching machine. This is necessary because the temperature of the hatching eggs themselves changes in dependence on the hatching process. For example, heat is generated by the movements of the chick during the hatching process, which heat is to be removed in order to prevent adverse effects on the chick. After the eggs have been hatched, the viable chicks are transported in crates to the poultry industry, for example a chicken breeding farm or a poultry meat producer.

The ensuing text will generally refer to hatching eggs and chicks. This relates in all cases to poultry such as chickens, ducks, pheasants, turkeys, and the like. The invention is not limited to a particular species.

The usual method as described above has disadvantages as regards animal health and wellbeing (in relation to, for example, hunger, thirst, suffering, hydration, natural living environment, stressful actions after hatching up to the transport and placement in a stable, comparatively dark surroundings and/or the application of disinfectants such as formalin). Three major causes may be mentioned for this.

First, there is a variation in the moment at which the eggs finally hatch in the hatcheries. A difference of as much as three days can occur in practice. Early born chicks remain in the incubator after hatching, where there is no water or food present. In addition, it is comparatively hot in the incubator, so that the early born chicks lose much moisture, which increases the risk of dehydration of the early born chicks. Also, the navels close badly, which increases the risk of disease.

Second, the handling of the chicks after birth causes stress because the chicks are exposed to changes of light, temperature and other stimuli, for example owing to mechanical and robotic machines such as, for example, a separator, chicken counter and/or (de-)stacking device.

Third, the air quality in the known incubators is not optimal. The feathery down in the final hatching machine causes a very fine dust which increases the risk of pulmonary pollution. Disinfectants are also often used in the known final hatching machines, which attacks the lungs and cilia of the chicks to a measurable degree.

It is apparent from the above that the known final hatching machine is animal-unfriendly. The use of the known final hatching machine with its conditioning means for conditioning the temperature, air movements and/or humidity, moreover, is comparatively difficult, laborious, and expensive.

It is accordingly an object of the present invention to provide an improved final hatching holder for use in a method of incubating hatching eggs whereby in a comparatively inexpensive manner the disadvantages mentioned and explained above as belonging to the conventional final hatching holder and method are reduced or eliminated, and in particular whereby the health and wellbeing of the animals are enhanced.

To achieve this object, the present invention provides a final hatching holder for incubating hatching eggs according to claim 1, designed in particular for use in a method according to claim 8. The method comprises the steps of supplying a plurality of hatching eggs, for example for delivery of a plurality of hatching eggs to a hatchery. The method further comprises a pre-hatching step in which the plurality of hatching eggs are placed in an incubator.

According to the invention, the method comprises a transport step in which at least a number of fertilized eggs out of the plurality of hatching eggs are transported to a poultry farm, such as a chicken breeding farm or poultry meat producer. So, unlike in the known method, it is the fertilized eggs that are transported and not the newly born chicks. In a preparatory step, furthermore, said number of fertilized eggs are placed in a final hatching holder as defined in claim 8.

The final hatching holder according to the present invention comprises a carrier body having a length and width that define a carrier body surface, in which carrier body a plurality of hatching egg accommodation openings are provided each for accommodating a hatching egg, and wherein the final hatching holder is provided with support elements that extend away from the carrier body, such that the final hatching holder, at least during operation, can be placed on end portions of the support elements facing away from the carrier body, said end portions thus being located at a distance from the hatching egg accommodation openings. The final hatching holder according to the present invention is provided with air flow means designed to effect a natural air flow along the plurality of hatching eggs, thus providing heating and/or cooling through convection, depending on the phase in which the hatching egg finds itself. The disadvantages of the known final hatching holder as mentioned above, as well as those of the known method, are thus eliminated or at least reduced in a comparatively inexpensive manner. In particular, the health and wellbeing of the animals are improved.

The hatching eggs may be in an upright position, with the narrow tips down. This provides a higher yield than the usual incubation manner, in which the eggs are usually hatched lying sideways in the final hatching cabinet. Although such an upright position is favourable, the position is not a limiting factor for the present invention. Upright, sideways and skew positions are conceivable within the scope of the invention.

The final hatching holder according to the present invention can be implemented in a comparatively simple manner and ensures that air movements around the hatching eggs are made possible owing to its construction, such that the hatching eggs are preferably kept at the correct temperature in a natural manner, through natural air flows and convection, in the final hatching phase. The final hatching holder in the embodiment described accordingly comprises passive conditioning means only, in contrast to the known final hatching device which requires active conditioning means (in the form of, for example, a pump, heater, fans).

The final hatching holder is provided with air flow means which are designed to achieve a natural ventilation or air flow along the plurality of hatching eggs, which results in convection. The eggs will thus be exposed substantially continuously to a cooling and/or heating flow of air whereby heat can be removed or supplied from or to the eggs, and the eggs will be kept at the correct temperature. In a final hatching step said final hatching holder containing the plurality of fertilized eggs is placed in a poultry stable or a space adjacent thereto of a poultry farm for incubating the plurality of hatching eggs in said poultry stable. No final hatching machine is required anymore thanks to the use of the final hatching holder according to the present invention, and the steps of separating, counting, stacking and transporting of animals have also become redundant.

The final hatching holder according to the present invention requires no extra facilities in addition to what is already present as a matter of course in poultry stables or in spaces adjacent thereto, such as heating, ventilation, litter, feed, water and light. The final hatching holder according to the present invention can accordingly be used in all traditional stables.

In the method according to the present invention, accordingly, the fertilized eggs are transported to the poultry farm and hatched in situ in the poultry stable in the final hatching holder according to the present invention, wherein the chicks can be born in an animal-friendly and more natural manner. The poultry farmer may make feed and water available and no, or at least fewer stressful activities need be carried out on the chicks, which benefits animal health. In addition, there will be more quiet, space and light in the poultry stable, providing for a lower-stress birth and start of life. The number of cubic meters of air is much greater than in a final hatching cabinet or incubator, so that the method according to the present invention is less conducive to infections. This improves the quality of the birth process as well as animal health and wellbeing. Furthermore, it is no longer necessary to drive to and fro with incubator trays. Such a transport involves risks, for example of salmonella infection. An expensive logistic step is also eliminated thereby. The transport of the hatching eggs considerably reduces this risk. The object of the present invention is achieved in this manner.

It is noted that NL 1 016 479 C1 submitted on 25.10.2000 discloses a method of producing and raising poultry birds wherein pre-hatched eggs are transported from the hatchery to the poultry farm in order to be finally hatched in a final incubator provided at the poultry farm. The hatching eggs are to be laid in the final incubator after transport. This final incubator is comparatively large and accordingly occupies much space at the poultry farmer's, and in addition is comparatively complex and expensive, for example owing to the fact that the final incubator machine is necessarily provided with means for conditioning the climate in the final incubator machine. This requires a comparatively large investment on the part of the poultry farmer. It also reduces his flexibility because the purchase of the final incubator at the same time more or less necessitates the poultry farmer to adopt the method described in the patent document cited above.

United States patent US 5,146,871 A describes a hatcher tray for incubating and hatching poultry eggs. United States patent US 6,129,505 A describes a stackable tray for eggs. United States patent publication US 2007/0245973 A1 describes a system and a method for incubating poultry eggs.

The method according to the present invention counteracts these disadvantages of the cited patent NL 1 016 479 C1 in that the hatching eggs are not placed in a comparatively complex final incubator device, but are placed in the comparatively simple and inexpensive final hatching holder with (passive) air flow means. This final hatching holder can be simply placed in any shed or stable of the poultry farm.

Advantageous further embodiments of the final hatching holder and the method according to the present invention will be explained below.

In an embodiment of the method, the preparatory step takes place before the transport step. Herein, the fertilized hatching eggs are placed in the final hatching holder according to the present invention and subsequently the fertilized hatching eggs are transported in the final hatching holder to the poultry farm. It suffices at the poultry farm to deposit the final hatching holders with the fertilized eggs in the poultry stable. The final hatching holder thus at the same time serves as the transport holder. Unlike in NL 1 016 479 C1, the hatching eggs need not be packaged for transport and be transferred from the transport holder to the final hatching machine at the poultry farm. The chicks need not be transferred from the eggs to the incubator in the stable. The method can thus be carried out more quickly and economically.

In an embodiment, the transport step comprises the transport of the plurality of fertilized eggs in a professional vehicle, such as a lorry. The vehicle is then provided with means suitable for carrying pre-hatched eggs under conditions in which the hatching process is not interfered with, among them means for regulating the temperature and/or the air flow in the space in which the eggs are present.

In an embodiment of the method, the latter comprises a selection step in which the plurality of hatching eggs are inspected so as to separate the plurality of hatching eggs into the number of fertilized eggs and a number of non-fertilized eggs. Such a selection step is known per se.

In an embodiment of the method, the preparatory step takes place during or immediately after the selection step. The effectiveness of the method can be advantageously increased and the method can be carried out more economically in that the selected fertilized eggs are placed in the final hatching holder according to the present invention directly during the selection step. After the eggs have been placed in the final hatching holder, the transport to the poultry farm takes place, where the final hatching holder with the hatching eggs can be directly deposited in the poultry stable. The method thus comprises only one packaging step, which is formed by the preparatory step.

The final hatching holder may be shaped such that it is delivered in a complete state, or it may be delivered in a flat state and be assembled together, in particular by folding and fitting of components into one another, so as to be used in the location as a final hatching holder. Logistic expenses are reduced thereby.

In an embodiment of the method, at least one of the pre-hatching step, the selection step, and the preparatory step takes place in a hatchery. Preferably all said steps take place in the hatchery. This enhances the efficiency of the method.

The final hatching holders may be stacked in the hatchery and be transported by means already present there, such as trolleys, pallets, etc.

As was noted above, the final hatching holder comprises air flow means for conducting air along the hatching egg during operation such that convection is created. The air flow means are in particular passively constructed. Passively constructed air flow means are defined herein as air flow means which in principle comprise no supplementary active component such as, for example, a pump, fan, or the like, in addition to the means already present in the space, such as (controllable) heating and (controllable) ventilation, (litter, fodder, water and light) necessary for achieving a flow of air along the hatching eggs for convection. Air movement along the hatching eggs will then take place substantially as a result of the natural flow of air.

In an embodiment of the air flow means, vent holes are present in the carrier body for the transport of air along and/or through the hatching egg accommodation openings. The vent holes are designed for ensuring a slow, continuous air flow along the hatching eggs in a passive manner through a natural flow of air, whereby a heat transfer through convection (both heat supply and removal, depending on the stage of final hatching) is improved.

The hatching egg accommodation openings may each be provided with a hatching egg seat against which a hatching egg rests in an operational position. The hatching egg seat may be formed by studs that extend towards the centre of the relevant accommodation opening. The use of the hatching egg seat, in particular in the form of studs, renders it possible in a simple manner to provide an air channel that constitutes the air flow means in the form of air vent holes. The risk of egg fracture is reduced thereby since the hatching egg seat is preferably made from a comparatively soft material and provides the egg with the correct support, so that an optimized protection of the egg all around is obtained. Furthermore, the material of the final hatching holder will assume the temperature of the surroundings, thus creating a buffer, i.e. a temporary insulation layer, which absorbs major temperature fluctuations.

According to the invention, , the air flow means, such as, for example, the air vent holes, are constructed as Venturi tubes. Venturi tubes are means known per se for generating a natural air flow from pressure differences between an inlet and an outlet of the tube. The Venturi tubes each comprise an inlet portion for air, an air passage portion, and an outlet portion for air. The Venturi tubes are constructed such that a lower pressure prevails adjacent the outlet than adjacent the inlet, so that a natural flow of air will arise through the Venturi tube. The surface area of the air passage is made comparatively small here, whereas the surface areas of the inlet and outlet portions are made comparatively large. A difference in air flow velocity will arise above the eggs, i.e. a kind of vacuum (underpressure, suction effect), whereby a flow of air and convection are generated between the egg and the egg seat.

In the final hatching holder according to the invention, the plurality of hatching egg accommodation openings each comprise a dome-shaped support wall that extends in the direction of the end portions. The dome shape may be round, oval, square or polygonal in cross-section, or have any other shape. The dome-shaped support wall is designed to mate substantially with the curvature of the hatching egg to be placed therein. An air vent hole is provided in the support wall, in particular adjacent the lower side thereof. The dome-shaped support wall is further provided with the hatching egg seat formed by stud elements extending away from the support wall, as described above, against which the hatching egg rests in the operational position. In this operational position, the outer side of the hatching egg and the surface of the support wall facing the egg together define a Venturi tube. Air can flow along the egg via the air vent hole and the Venturi tube.

The air flow means may in particular be constructed such that convection takes place on both sides of the dome-shaped support wall.

In final hatching holder according to the invention, the plurality of hatching egg accommodation openings each comprise a dome-shaped support wall extending in the direction of the end portions, said support wall being provided with at least one air vent hole in a portion of the support wall that faces the end portions, while the support wall is provided with a plurality of studs that extend towards the center of the accommodation opening so as to form a hatching egg seat. The studs are arranged herein such that a Venturi tube is formed at least between the hatching egg and the support wall when the hatching egg is in the operational position. Also, a further Venturi tube may be created in the final hatching holder , i.e. such that convection can take place on both sides of the dome-shaped support wall. The double convection along the support wall optimizes the conditions for the hatching egg.

In an embodiment of the final hatching holder, the distance of the end portions to the hatching egg accommodation openings, in particular to a portion of the hatching egg accommodation openings closest to the relevant end portions, lies between 0.5 cm and 100 cm, in particular between 1 cm and 40 cm, such as between 3 cm and 30 cm, more in particular between 5 cm and 25 cm, being, for example approximately 20 cm. In particular, the height is approximately between 12 cm and 14 cm. A spacing between the end portions and the hatching egg accommodation openings provides a sufficient space at the lower sides of the hatching eggs such that a sufficient natural air flow can be achieved. A somewhat greater distance provides a better supply of air, while a greater distance at the other side causes a steeper drop of the chicks upon birth.

In an embodiment of the final hatching holder, the plurality of hatching egg accommodation openings are arranged in a regular pattern, in particular a matrix pattern. This makes for an efficient transport and/or hatching.

In an embodiment of the final hatching holder, the number of hatching egg accommodation openings lies between 1 and 200, for example between 20 and 130, in particular between 40 and 110, more in particular between 60 and 90 such as, for example, at 75. In an alternative embodiment, the number of hatching egg accommodation openings is, for example, 150. The dimensions of the final hatching holder may be attuned thereto. It is particularly preferable that a length or a width of the final hatching holder is approximately equal to 60 cm, for example lying between 55 cm and 65 cm. A usual size is, for example, 60 cm by 40 cm. Such dimensions are particularly readily usable in conventional processes, especially in hatcheries. The weight of a single final hatching holder including the eggs accommodated therein is preferably lower than approximately 20 kg. This has ergonomic advantages. It will be clear, however, to those skilled in the art that alternative dimensions and/or weights and/or numbers of hatching egg accommodation openings are possible and fall within the scope of the invention.

In an embodiment of the final hatching holder, said final hatching holder is constructed such that a further final hatching holder according to the invention can be placed with its end portions on said final hatching holder. The final hatching holders are thus designed to be stackable, which simplifies especially their transport. The final hatching holders can as it were be nested together, such that a plurality of final hatching holders can be stacked one on the other for efficient transport. The hatching eggs are well protected against shocks and fractures during transport. The transport density of the final hatching holders with hatching eggs, moreover, can be greater than the transport density of live chicks.

The final hatching holder is preferably manufactured from a recyclable material, in particular from a (biologically) degradable material such as, for example, potato starch (shaped, for example, by injection moulding), cardboard, paper pulp, or a similar material. When such a material is used, especially potato starch or cardboard, the final hatching holder can disappear into a floor covering such as litter, sawdust or manure, for example through kicking and scratching or playing of the chicks, combustion, or shredding, such that energy or floor covering can be regained therefrom. Furthermore, the final hatching holder may be manufactured in various ways, for example by conventional techniques, but also by (comparatively) novel techniques such as, for example, 3D additive multiplication techniques such as 3D printing. Since the final hatching holder is degradable, no transport of transport holders back to the hatchery is required, neither is any cleaning step to be carried out on the transport holders. This is favorable for bio-security, transmission of diseases and hygiene. The material described above is also an animal-friendly and soft material against which newly born chicks cannot injure themselves.

The final hatching holder may indeed be made from an alternative material. The invention is not limited to any type of material from which the final hatching holder is manufactured. In an embodiment, for example, the final hatching holder is made from a (re-usable) material such as synthetic resin.

According to an aspect, the invention provides the use of a final hatching holder as described above, which use involves the application of the method according to the present invention.

In an embodiment, said use comprises a step of stacking a plurality of final hatching holders on one another, in particular as part of the transport step.

The invention will be explained in more detail below in a description of one or several preferred embodiments of the method and the final hatching holder according to the present invention with reference to the accompanying figures, in which:
Figures 1a - 1d are elevations of a final hatching holder according to the present invention;
Figures 2a and 2b show detailed views of the final hatching holder of figure 1; and
Figures 3a - 3c are elevations of an alternative embodiment of the final hatching holder according to the present invention.

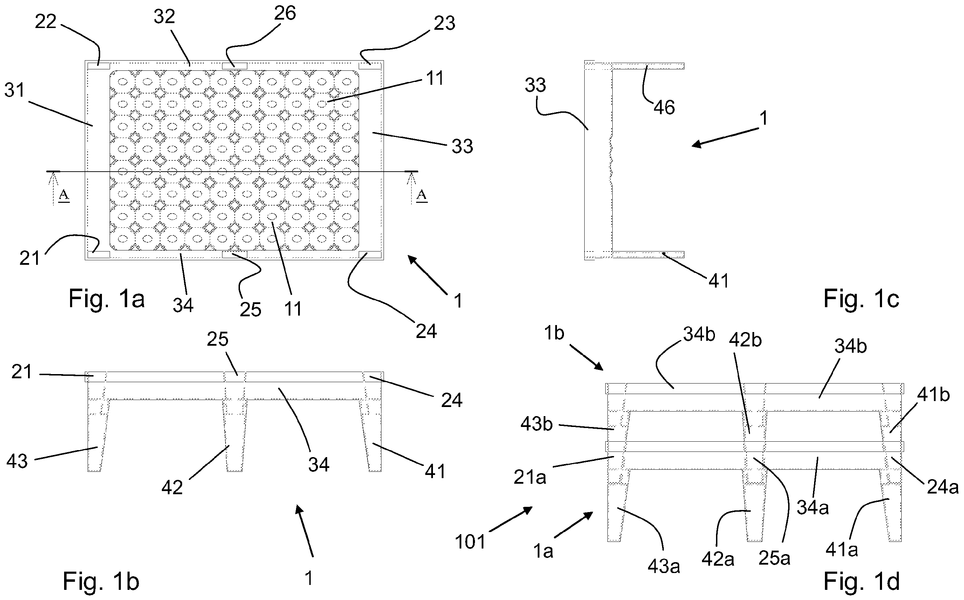

Figures 1a, 1b and 1c show a final hatching holder 1 according to the present invention in plan view, front elevation, and side elevation (rotated through 90°), respectively. Identical or equivalent components have been given the same reference numerals each time. The final hatching holder 1 comprises a carrier body with a plurality of hatching egg accommodation openings 11, each capable of accommodating a hatching egg. The carrier body is bounded by two long sides 32, 34 and two short sides 31, 33. As is clearly visible in figure 1b, the final hatching holder 1 comprises a number of elongate legs 41, 42, 43 which constitute support elements that extend away from the carrier body. The final hatching holder 1 can be placed on the end portions of the support elements facing away from the carrier body, for example on the floor of a stable, as will be explained in more detail further below. A total of six support elements or legs 41, 42, 43, 46 are provided. An alternative number of support elements, such as three, four, eight, or some other number, is obviously also conceivable.

The support elements 41-46 may in particular have a height as described above, for example lying between 5 and 25 cm, such as 12 cm or 20 cm. This provides a sufficient buffer zone between the floor temperature of the stable (often 26 to 30 °C) and an ambient temperature at the egg/chick level of 34 °C. This makes it even warmer higher up in the stable, which causes air to circulate. In addition, an insulating layer is formed under the final hatching holder, partly by the protection of the final hatching holder itself. The height is also such that the drop for the newly born chicks is comparatively small, so that the newly born chicks cannot suffer any undesirable injuries.

In the situation shown in figure 1a, eight hatching egg accommodation openings 11 are provided distributed over the width, i.e. in a direction parallel to the short sides 31, 33. In longitudinal direction, i.e. parallel to the long sides 32, 34, there are ten hatching egg accommodation openings 11. A total of eighty hatching eggs can accordingly be accommodated. It is obviously conceivable to change these numbers in dependence on one's requirements.

Figure 1a further shows that nesting holes 21, 22, 23, 24, 25, 26 are present at the corner points and on the long sides 32, 34. As is particularly visible in figure 1d, these nesting holes 21-26 are provided such that a first final hatching holder 1b can be fitted into the nesting holes 21a, 25a, 24a of a second final hatching holder 1a so as to form a stacked assembly 101. An intermediate space is present in the assembled, stacked state so that hatching eggs accommodated in the second final hatching holder 1a are not touched by a lower side of the first final hatching holder 1b. In addition, the spacing is chosen in particular such that a natural flow of air along the hatching eggs in the first hatching egg holder 1b is still possible.

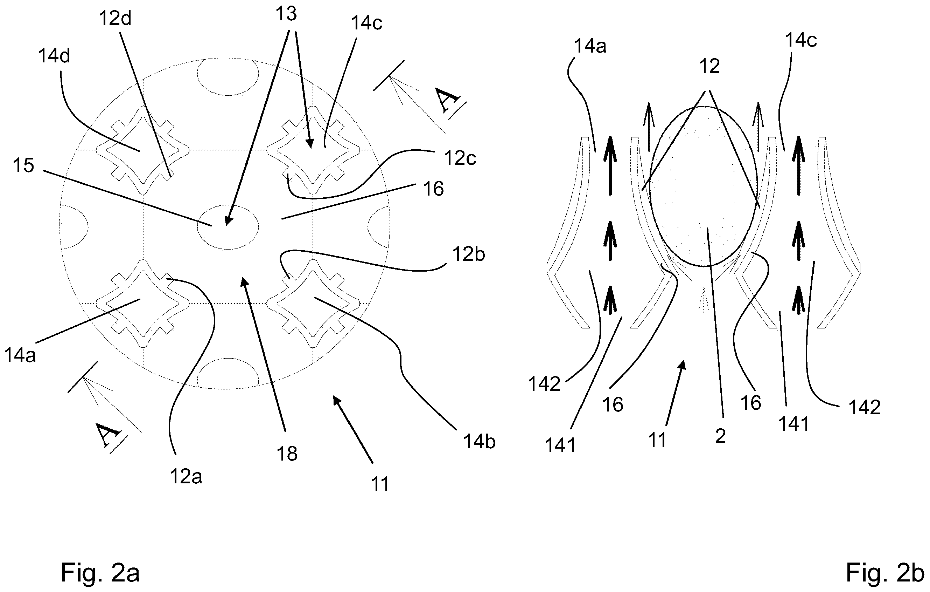

Figure 2a is a detailed plan view of an embodiment of a hatching egg accommodation opening 11 of the final hatching holder 1 according to the present invention. Figure 2b is a cross-sectional view taken on the line A-A in figure 2a. The hatching egg accommodation opening 11 comprises a substantially dome-shaped or egg-shaped support wall 16. The dome shape may be round, oval, square or polygonal, or any other shape. The support wall 16 comprises four support elements 12 in the embodiment shown. An alternative number is conceivable. Stud portions 12a, 12b, 12c, 12d extend away from the support element 12 to the centre of the hatching egg accommodation opening 11. The stud portions 12a, 12b, 12c, 12d form a hatching egg seat on which a hatching egg 2 bears in the operational position, as is clearly visible in figure 2b.

The final hatching holder 11 is further provided with air flow means 13 for causing air to flow along the hatching egg, specifically through a natural flow of air so as to cause convection. The air flow means comprise a first air channel formed between the hatching egg in its operational position and the support wall 16. Air can flow through this first air channel via a vent hole 15 in the lower side of the support wall 16 along the hatching egg 2 in an upward direction. It is apparent that the first channel is designed as a Venturi tube with a comparatively wide opening (low resistance) at the upper side and a comparatively small flow surface area (higher resistance) at the lower side. The resulting air pressure differences will cause a natural flow of air through the first channel, as a result of which a slow, continuous flow will take place along the egg 2. Thus the hatching egg 2, when in its holder 1, will experience substantially the correct hatching temperature in that the natural flow of air ensures a convective heat supply or removal without any supplementary systems being required in the vicinity of the hatching egg. This is true in particular for the environment in a stable, which is normally kept at a certain temperature anyway. This renders it possible to position the hatching egg holder according to the present invention directly on the floor of a stable.

The use of air flow means in the form of a Venturi tube imitates as it were the final hatching by the mother hen (biomimicry) and ensures a optimized air flow, temperature and humidity, ventilation of fresh air/oxygen, a correct gas exchange and O₂ and CO₂ values owing to the correct porosity of the egg shell, and a correct moisture content of the egg in conjunction with the air chamber, also owing to the correct porosity of the egg shell.

The air flow means further comprise a second air channel 14a, 14b, 14c, 14d formed in that the support elements 12 are constructed so as to be substantially hollow. As is clearly shown in figure 2b, the second channel comprises an inlet portion 141, a central portion 142, and an outlet portion (referenced 14a, 14c here). The central portion 142 has a larger flow surface area than the inlet portion 141. The difference in air pressure between stagnant air and moving air in combination with a comparatively small passage next to the egg draws air in through this narrow channel. The seat further provides protection against major temperature fluctuations. The two channels side by side with more and less flow resistance provide an improved natural flow of air along the egg seat and provide an improved convection.

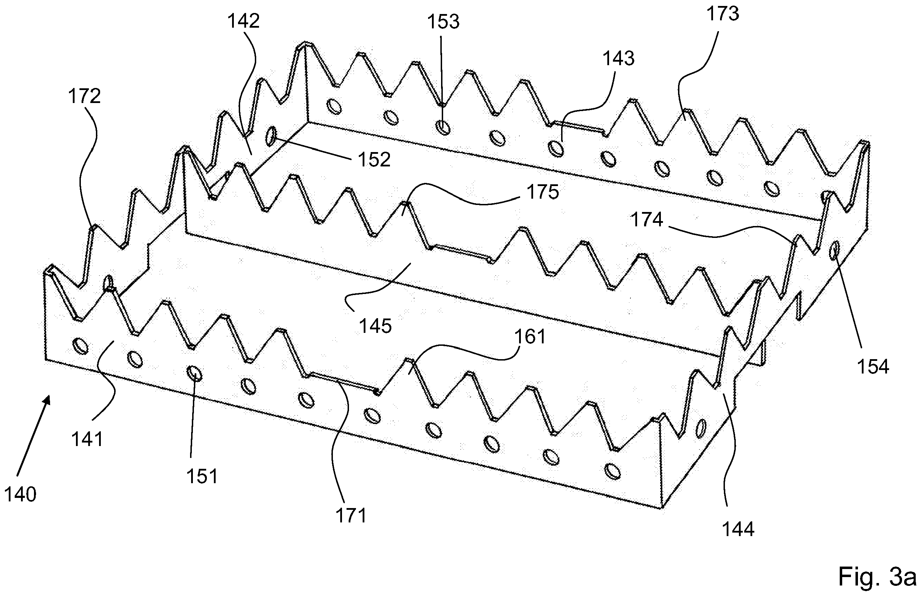

Figures 3a to 3c show the construction of a further advantageous embodiment of a final hatching holder 101 according to the present invention. Since this embodiment of the final hatching holder 101 is built up from one or more components, this embodiment of the final hatching holder can be manufactured particularly inexpensively. It holds in particular here that the final hatching holder can be manufactured from a recyclable material in a comparatively simple manner, in particular from a (biologically) degradable material such as, for example, potato starch (shaped, for example, by injection moulding), cardboard, paper pulp, or a similar material. When such a material is used, as was noted above, especially potato starch or cardboard, the final hatching holder can disappear after use into a floor covering such as litter, sawdust or manure, for example through kicking and scratching or playing of the chicks. The final hatching holder being degradable, no transport of transport holders back to the hatchery is required, while in addition no cleaning step is to be carried out on the holders anymore. This has advantages for bio-security, transmission of diseases, and hygienic aspects.

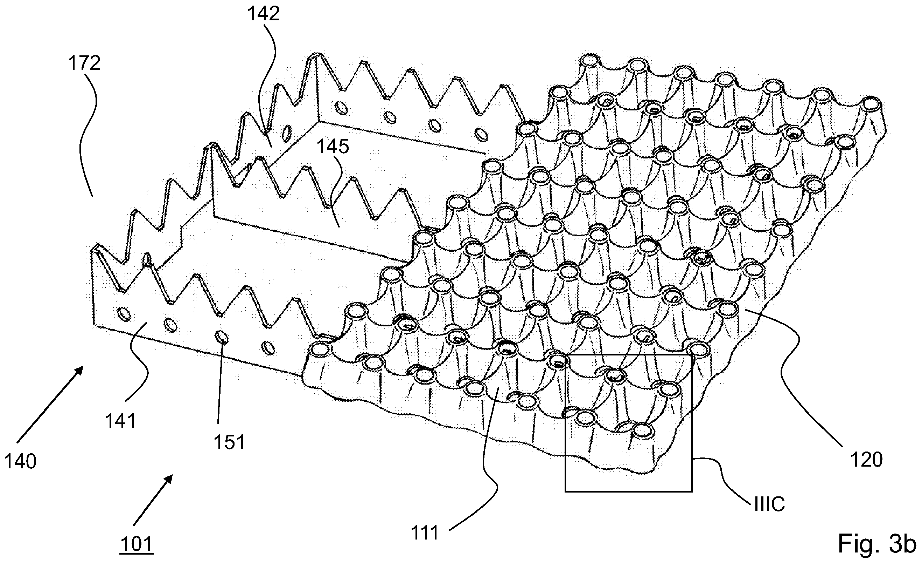

The final hatching holder in the embodiment of figures 3a to 3c comprises support elements 140 shown in figure 3a. The support elements 140 comprise a number of plate-shaped elements 141-145 which are joined together so as to form a rectangular and/or square circumference. Since the plate-shaped elements 141-145 are planar, they are very easy to manufacture. A support element 145 is provided between two short sides for strengthening the assembly of support elements 140 and for enlarging a supporting surface area formed by the upper sides of the elements 141-146. Vent holes 151-154 are provided in the outer support elements 141-144. The upper sides of the support elements 141-145 have a sawtooth shape for accommodating a carrier body, as is more clearly visible in figure 3b, where a carrier body 120 is placed on the support elements 140. This shows only part of a carrier body for reasons of clarity, so that the support elements are visible. Normally the entire surface area of the support elements will be used for supporting a carrier body, or several individual carrier bodies. Thus there will be space for a total of 8 rows of 12 columns each of hatching egg accommodation openings 111 in the embodiment shown. This may be achieved in that a total of two (separate) carrier bodies as shown in figure 3b are provided, or in that more than two smaller carrier bodies or a single integral carrier body with a total of 96 hatching egg accommodation openings are/is provided. An alternative number of hatching egg accommodation openings is possible, however, and the invention is expressly not limited to the number of hatching egg accommodation openings mentioned and/or shown.

The embodiment shown in figures 3a and 3b is particularly easy to manufacture, for example from a recyclable material, the support elements 140 and the carrier body 120 being manufactured separately. It is also advantageous that the storage of the individual components is simple and requires little space. The risk of fracture caused by shocks during transport is minimized in that the egg seat has several support elements around the egg and is made from a soft material. The method according to the present invention, furthermore, involves less risk of fractures because it contains one handling step less, the packaging step being at the same time the preparatory step.

If necessary, a support element 140 and a separate carrier body 120 may be provided, whereupon the two separate components are joined together into a final hatching holder 101 according to the present invention. This may be done by the user himself or in situ in a factory.

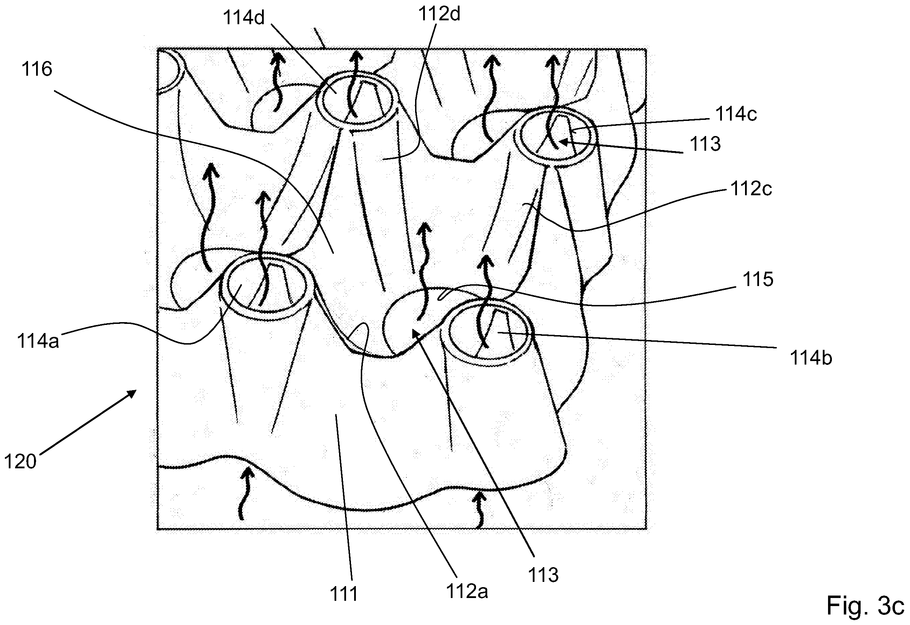

Figure 3c finally shows in detail a portion of the final hatching holder 101 of figure 3b that is referenced IIIC therein. This figure in particular shows in detail the shape of the air flow means 113 which are designed for achieving convection through a natural flow of air along the plurality of hatching eggs. The air flow means 113 are designed for causing air to flow along the hatching egg, in particular through a natural flow of air so as to achieve convection. The air flow means 113 are substantially equal here to the embodiment shown in figures 2a and 2b and comprise a first air channel formed between the hatching egg in its operational position and the support wall 116. This air channel is formed owing to the fact that stud portions 112c, 112d extend from the support wall 116 towards the centre of the hatching egg accommodation opening 111. The stud portions 112c, 112d constitute a hatching egg seat against which a hatching egg rests in its operational position, as was shown above in figure 2b, such that an air channel is formed between the hatching egg and the support wall. Air can flow through this first air channel via a vent hole in the lower side of the support wall 116 along the hatching egg in an upward direction. When the hatching egg is in position, the first channel has the shape of a Venturi tube with a comparatively wide opening (low resistance) at the upper side and a comparatively small flow surface area (higher resistance) at the lower side. The resulting air pressure differences will cause an optimized natural flow of air, with an optimized temperature and humidity, ventilation of fresh air/oxygen, a correct gas exchange and O₂ and CO₂ values owing to the correct porosity of the egg shell, and a correct moisture content of the egg in conjunction with the air chamber, also owing to the correct porosity of the egg shell.

The air flow means 113 comprise a second air channel 114a, 114b, 114c, 114d, as shown in figure 3c, created in that four crests are formed regularly around respective hatching egg accommodation openings 111 in the carrier body 120. Said crests are provided with respective openings 114a, 114b, 114c, 114d, whereby the second air channel is formed. The two air channels lying side by side, separated by the support wall 116 and having higher and lower air flow resistances, provide an improved natural flow of air along the egg seat and ensure an improved convection, as well as protecting against major temperature fluctuations.

In the method according to the present invention, the hatching eggs are transported to the poultry farm, where they are placed in the stable environment in the final hatching holder according to the present invention so as to be hatched. The final hatching holder may be placed on the stable floor, in particular on a floor covering such as litter that is present on the floor of the stable. The stable floor temperature may then initially be kept, for example, at a level of 28 °C to 36 °C, in particular within a range of approximately 32 °C to 35 °C. The temperature may subsequently be reduced by a few degrees per week, for example until the outside temperature has been approximately reached. After emerging from the eggs in the stable, the chicks can find protection near the final hatching holder. It is particularly advantageous in this respect that the final hatching holder 1 according to the present invention can at the same time serve as a transport holder, for example for transporting the hatching eggs from a hatchery to a poultry farm. An additional step is thus dispensed with.

In an embodiment of the method according to the invention, in particular, the eggs to be hatched are processed in a hatchery in a known manner, whereupon the fertilized eggs are placed in a final hatching holder 1 according to the invention during the inspection step. The final hatching holders containing the hatching eggs are subsequently transported in a manner known per se, for example in a transport vehicle, to the poultry farm, where they are placed in a stable so as to be finally hatched.

The advantages of the method and final hatching holder have been detailed above, but a few will be listed below for completeness' sake:
- improved animal health, wellbeing, and bio-security, so that fewer antibiotics are required;
- improved growth results;
- overall better feed conversion;
- feed saving: not required for health recovery process;
- feed saving through stress shock prevention: no more transport of young chicks;
- reduction of wastage caused by stress shock, general health improvement;
- young chicks make a better start in life;
- no use of disinfectants, such as formalin, on live chicks;
- cost saving owing to elimination of one or more conventional process steps and since no expensive final incubator machine is necessary;
- chicks are present in a stable immediately after birth, where quiet, space, warmth, food, water and light can be present for reducing stress in the chicks: so improved animal wellbeing;
- no transport of live chicks;
- final hatching holders can be recyclable, biologically degradable and very inexpensive: so returning and cleaning of transport holders for chicks is no longer necessary;
- air movement along the hatching egg renders the supply and removal of heat possible, depending on the phase of the hatching egg;
- applicable in any poultry farm without adaptations and/or investments because the climate control means already present will suffice.

It will be clear to those skilled in the art that the invention was described above with reference to a few possible embodiments that are preferred. The invention, however, is by no means limited to these embodiments. Thus, for example, it is conceivable that the final hatching holder is differently designed, for example for improving its sturdiness, the air flow to be generated, its portability, etc. Many modifications are feasible within the scope of the invention. The protection applied for is defined by the appended claims.

## Claims

1. A final hatching holder (1, 101) for final hatching of hatching eggs (2), comprising a carrier body (120) having a length and width that define a carrier body surface, in which carrier body (120) a plurality of hatching egg accommodation openings (11) are provided each for accommodating a hatching egg, and wherein the final hatching holder (1, 101) is provided with support elements (41-46) that extend away from the carrier body (120), such that the final hatching holder (1, 101), at least during operation, can be placed on end portions of the support elements (41-46) facing away from the carrier body (120), said end portions thus being located at a distance from the hatching egg accommodation openings (11), and wherein the final hatching holder (1, 101) is provided with air flow means (13) designed to effect convection by a natural flow of air along the plurality of hatching eggs (2). wherein the plurality of hatching egg accommodation openings (11) each comprise a dome-shaped support wall (16) that extends in the direction of the end portions, which support wall (16) is provided with a vent hole (15) in a portion of the support wall (16) facing the end portions, and wherein the support wall (16) is provided with a plurality of studs (12a-12d; 112a-112d) extending towards the centre of the accommodation opening so as to form a hatching egg seat, and wherein said studs (12a-12d; 112a-112d) are arranged such that, with the hatching egg (2) in its operational position, at least one Venturi tube is formed between the hatching egg (2) and the support wall (16).

2. A final hatching holder according to claim 1, wherein the final hatching holder is manufactured from a biologically degradable material.

3. A final hatching holder (1, 101) according to claim 1 or 2, wherein said support wall (16) comprises support elements (12), and wherein the air flow means (13) further comprise a second air channel (14a, 14b, 14c, 14d) formed in that said support elements (12) of said support wall (16) are constructed so as to be substantially hollow.

4. A final hatching holder according to claim 1, 2 or 3, wherein a further Venturi tube is formed in the final hatching holder such that convection takes place on both sides of the dome-shaped support wall.

5. A final hatching holder (1, 101) according to any one of the claims 1 - 4, wherein the distance from the end portions to the hatching egg accommodation openings (11), in particular to a portion of the hatching egg accommodation opening (11) that lies closest to the end portions, is between 0.5 cm and 100 cm, in particular between 1 cm and 40 cm, such as between 3 cm and 30 cm, more in particular between 5 cm and 25 cm, being, for example, approximately 12 cm or 20 cm.

6. A final hatching holder (1, 101) according to any one of the claims 1 - 5, wherein the number of hatching egg accommodation openings (11) lies between 20 and 130, in particular between 40 and 110, more in particular between 60 and 90, being, for example, 75.

7. A final hatching holder (1, 101) according to any one of the claims 1 - 6, wherein said final hatching holder (1, 101) is designed such that a further final hatching holder (1, 101) according to any one of the preceding claims 1 to 4 can be placed with its end portions on said final hatching holder (1, 101).

8. A method for the final hatching of hatching eggs (2), comprising the steps of:
- providing a plurality of hatching eggs (2);
- placing said plurality of hatching eggs (2) in an incubator in a pre-hatching step;
- providing a final hatching holder (1, 101), at least comprising a carrier body (120) having a length and width that define a carrier body surface, in which carrier body (120) a plurality of hatching egg accommodation openings (11) are provided each for accommodating a hatching egg, and wherein the final hatching holder (1, 101) is provided with support elements (41-46) that extend away from the carrier body (120), such that the final hatching holder (1, 101), at least during operation, can be placed on end portions of the support elements (41-46) facing away from the carrier body (120), said end portions thus being located at a distance from the hatching egg accommodation openings (11);
- placing the number of fertilized eggs (2) in the final hatching holder (1, 101) in a preparatory step;
- transporting the final hatching holder (1, 101) containing the number of fertilized eggs (2) to a poultry farm, such as a breeder farm and/or a poultry meat farm, in a transport step;
- wherein final hatching holder (1, 101) is provided with air flow means (13) designed to effect convection by a natural flow of air along the plurality of hatching eggs (2); and wherein the method comprises the step of:
- placing the final hatching holder (1, 101) containing the number of fertilized eggs (2) in a poultry stable of the poultry farm in a final hatching step, in which stable the number of fertilized hatching eggs (2) are finally hatched.

9. A method according to claim 8, wherein the final hatching holder is manufactured from a biologically degradable material.

10. A method according to claim 8 or 9, wherein the preparatory step takes place before the transport step.

11. A method according to claim8, 9, or 10, comprising a selection step in which the plurality of hatching eggs (2) are inspected so as to separate the plurality of hatching eggs (2) into the number of fertilized hatching eggs (2) and a number of non-fertilized hatching eggs (2).

12. A method according to claim 11, wherein the preparatory step takes place during or immediately after the selection step.

13. A method according to any one of the preceding claims 8-12, wherein at least one of the steps: pre-hatching step, selection step and preparatory step, takes place in a hatchery.

## Patentansprüche

1. Fertigbruthalter (1, 101) zum Fertigbrüten von Bruteiern (2), einen Trägerkörper (120) umfassend, der eine Länge und eine Breite aufweist, die eine Trägerkörper-Oberfläche definieren, wobei in dem Trägerkörper (120) mehrere Brutei-Aufnahmeöffnungen (11) bereitgestellt sind, die jeweils zur Aufnahme eines Bruteis vorgesehen sind, und wobei der Fertigbruthalter (1, 101) mit Stützelementen (41-46) versehen ist, die sich derart von dem Trägerkörper (120) weg erstrecken, dass der Fertigbruthalter (1, 101) zumindest während des Betriebs an Endabschnitten der Stützelemente (41-46), abgewandt von dem Trägerkörper (120) platziert werden kann, wobei die Endabschnitte somit in einem Abstand zu den Brutei-Aufnahmeöffnungen (11) angeordnet sind, und wobei der Fertigbruthalter (1, 101) mit Luftströmungsmitteln (13) versehen ist, die dafür gestaltet sind, durch einen natürlichen Luftstrom entlang der mehreren Bruteier (2) eine Konvektion zu bewirken, wobei die mehreren Brutei-Aufnahmeöffnungen (11) jeweils eine kuppelförmige Stützwand (16) umfassen, die sich in der Richtung der Endabschnitte erstreckt, wobei die Stützwand (16) mit einer Belüftungsöffnung (15) in einem Abschnitt der Stützwand (16), der den Endabschnitten zugewandt ist, versehen ist und wobei die Stützwand (16) mit mehreren Nasen (12a-12d, 112a-112d) versehen ist, die sich zur Mitte der Aufnahmeöffnung erstrecken, so dass ein Bruteisitz gebildet ist, und wobei die Nasen (12a-12d, 112a-112d) derart angeordnet sind, dass zwischen dem Brutei (2) und der Stützwand (16) mindestens ein Venturi-Rohr gebildet ist, wenn sich das Brutei (2) in seiner Betriebsposition befindet.

2. Fertigbruthalter nach Anspruch 1, wobei der Fertigbruthalter aus einem biologisch abbaubaren Material hergestellt ist.

3. Fertigbruthalter (1, 101) nach Anspruch 1 oder 2, wobei die Stützwand (16) Stützelemente (12) umfasst und wobei die Luftströmungsmittel (13) ferner einen zweiten Luftkanal (14a, 14b, 14c, 14d) umfassen, der dadurch gebildet ist, dass die Stützelemente (12) der Stützwand (16) derart konstruiert sind, dass sie im Wesentlichen hohl sind.

4. Fertigbruthalter nach Anspruch 1, 2 oder 3, wobei in dem Fertigbruthalter ein weiteres Venturi-Rohr gebildet ist, so dass an beiden Seiten der kuppelförmigen Stützwand eine Konvektion stattfindet.

5. Fertigbruthalter (1, 101) nach einem der Ansprüche 1 bis 4, wobei der Abstand von den Endabschnitten bis zu den Brutei-Aufnahmeöffnungen (11), insbesondere bis zu einem Abschnitt der Brutei-Aufnahmeöffnung (11), der den Endabschnitten am nächsten liegt, zwischen 0,5 cm und 100 cm beträgt, insbesondere zwischen 1 cm und 40 cm, wie beispielsweise zwischen 3 cm und 30 cm, konkreter zwischen 5 cm und 25 cm, zum Beispiel ungefähr 12 cm oder 20 cm beträgt.

6. Fertigbruthalter (1, 101) nach einem der Ansprüche 1 bis 5, wobei die Anzahl der Brutei-Aufnahmeöffnungen (11) zwischen 20 und 130 liegt, insbesondere zwischen 40 und 110, konkreter zwischen 60 und 90, zum Beispiel 75 beträgt.

7. Fertigbruthalter (1, 101) nach einem der Ansprüche 1 bis 6, wobei der Fertigbruthalter (1, 101) derart gestaltet ist, dass ein weiterer Fertigbruthalter (1, 101) nach einem der Ansprüche 1 bis 4 mit seinen Endabschnitten an dem Fertigbruthalter (1, 101) platziert werden kann.

8. Verfahren zum Fertigbrüten von Bruteiern (2), die folgenden Schritte umfassend:
- Bereitstellen mehrerer Bruteier (2),
- Platzieren der mehreren Bruteier (2) in einem Inkubator in einem Vorbrütungsschritt,
- Bereitstellen eines Fertigbruthalters (1, 101), der mindestens einen Trägerkörper (120) umfasst, der eine Länge und eine Breite aufweist, die eine Trägerkörper-Oberfläche definieren, wobei in dem Trägerkörper (120) mehrere Brutei-Aufnahmeöffnungen (11) bereitgestellt sind, die jeweils zur Aufnahme eines Bruteis vorgesehen sind, und wobei der Fertigbruthalter (1, 101) mit Stützelementen (41-46) versehen ist, die sich derart von dem Trägerkörper (120) weg erstrecken, dass der Fertigbruthalter (1, 101) zumindest während des Betriebs an Endabschnitten der Stützelemente (41-46), abgewandt von dem Trägerkörper (120) platziert werden kann, wobei die Endabschnitte somit in einem Abstand zu den Brutei-Aufnahmeöffnungen (11) angeordnet sind,
- Platzieren der Anzahl befruchteter Eier (2) in dem Fertigbruthalter (1, 101) in einem Vorbereitungsschritt,
- Transportieren des Fertigbruthalters (1, 101), der die Anzahl befruchteter Eier (2) enthält, zu einer Geflügelzuchtanlage, wie beispielsweise einer Aufzuchtanlage und/oder einer Geflügelmastanlage, in einem Transportschritt,
- wobei der Fertigbruthalter (1, 101) mit Luftströmungsmitteln (13) versehen ist, die dafür gestaltet sind, durch einen natürlichen Luftstrom entlang der mehreren Bruteier (2) eine Konvektion zu bewirken, und wobei das Verfahren ferner den folgenden Schritt umfasst:
- Platzieren des Fertigbruthalters (1, 101), der die Anzahl befruchteter Eier (2) enthält, in einem Geflügelstall der Geflügelzuchtanlage in einem Fertigbrütungsschritt, wobei in dem Stall die Anzahl befruchteter Eier (2) fertiggebrütet wird.

9. Verfahren nach Anspruch 8, wobei der Fertigbruthalter (1, 101) aus einem biologisch abbaubaren Material hergestellt wird.

10. Verfahren nach Anspruch 8 oder 9, wobei der Vorbereitungsschritt vor dem Transportschritt stattfindet.

11. Verfahren nach Anspruch 8, 9 oder 10, einen Auswahlschritt umfassend, in dem die mehreren Bruteier (2) untersucht werden, so dass die mehreren Bruteier (2) in eine Anzahl befruchteter Bruteier (2) und eine Anzahl unbefruchteter Bruteier (2) unterteilt werden.

12. Verfahren nach Anspruch 11, wobei der Vorbereitungsschritt während oder unmittelbar nach dem Auswahlschritt stattfindet.

13. Verfahren nach einem der Ansprüche 8 bis 12, wobei mindestens einer der Schritte: Vorbrütungsschritt, Auswahlschritt und Vorbereitungsschritt in einem Brutbetrieb stattfindet.

## Revendications

1. Support d'éclosion finale (1, 101) pour l'éclosion finale d'œufs à couver (2), comprenant un corps porteur (120) ayant une longueur et une largeur qui définissent une surface de corps porteur, dans lequel corps porteur (120) une pluralité d'ouvertures de réception d'œufs à couver (11) sont prévues chacune pour recevoir un œuf à couver, et où le support d'éclosion finale (1, 101) est muni d'éléments de soutien (41-46) qui s'étendent en s'éloignant du corps porteur (120), de sorte que le support d'éclosion finale (1, 101), au moins lors du fonctionnement, peut être placé sur des parties d'extrémité des éléments de soutien (41-46) opposées au corps porteur (120), lesdites parties d'extrémité étant ainsi situées à distance des ouvertures de réception d'œufs à couver (11), et où le support d'éclosion finale (1, 101) est muni de moyens d'écoulement d'air (13) conçus pour effectuer une convection par un écoulement d'air naturel le long de la pluralité d'œufs à couver (2), où la pluralité d'ouvertures de réception d'œufs à couver (11) comprennent chacune une paroi de soutien en forme de dôme (16) qui s'étend dans la direction des parties d'extrémité, laquelle paroi de soutien (16) est munie d'un trou d'évent (15) dans une partie de la paroi de soutien (16) opposée aux parties d'extrémité, et où la paroi de soutien (16) est munie d'une pluralité de goujons (12a-12d; 112a-112d) s'étendant vers le centre de l'ouverture de réception de manière à former un siège d'œuf à couver, et où lesdits goujons (12a-12d; 112a-112d) sont agencés de sorte que, lorsque l'œuf à couver (2) est dans sa position fonctionnelle, au moins un tube de Venturi est formé entre l'œuf à couver (2) et la paroi de soutien (16).

2. Support d'éclosion finale selon la revendication 1, dans lequel le support d'éclosion finale est fabriqué à partir d'un matériau biologiquement dégradable.

3. Support d'éclosion finale (1, 101) selon la revendication 1 ou 2, dans lequel ladite paroi de soutien (16) comprend des éléments de soutien (12), et où les moyens d'écoulement d'air (13) comprennent en outre un deuxième canal d'air (14a, 14b, 14c, 14d) formé de sorte que lesdits éléments de soutien (12) de ladite paroi de soutien (16) soient construits de manière à être essentiellement creux.

4. Support d'éclosion finale selon la revendication 1, 2 ou 3, dans lequel un autre tube de Venturi est formé dans le support d'éclosion finale de sorte qu'une convection se déroule sur les deux côtés de la paroi de soutien en forme de dôme.

5. Support d'éclosion finale (1, 101) selon l'une quelconque des revendications 1 à 4, dans lequel la distance à partir des parties d'extrémité jusqu'aux ouvertures de réception d'œufs à couver (11), en particulier jusqu'à une partie de l'ouverture de réception d'œuf à couver (11) qui est la plus proche des parties d'extrémité, est comprise entre 0,5 cm et 100 cm, en particulier entre 1 cm et 40 cm, par exemple entre 3 cm et 30 cm, plus particulièrement entre 5 cm et 25 cm, étant, par exemple, d'environ 12 cm ou 20 cm.

6. Support d'éclosion finale (1, 101) selon l'une quelconque des revendications 1 à 5, dans lequel le nombre d'ouvertures de réception d'œufs à couver (11) est compris entre 20 et 130, en particulier entre 40 et 110, plus particulièrement entre 60 et 90, étant, par exemple, de 75.

7. Support d'éclosion finale (1, 101) selon l'une quelconque des revendications 1 à 6, dans lequel ledit support d'éclosion finale (1, 101) est conçu de sorte qu'un autre support d'éclosion finale (1, 101) selon l'une quelconque des revendications précédentes 1 à 4 puisse être placé avec ses parties d'extrémité sur ledit support d'éclosion finale (1, 101).

8. Procédé d'éclosion finale d'œufs à couver (2), comprenant les étapes consistant à :
- fournir une pluralité d'œufs à couver (2) ;
- placer ladite pluralité d'œufs à couver (2) dans un incubateur dans une étape de pré-éclosion ;
- fournir un support d'éclosion finale (1, 101), comprenant au moins un corps porteur (120) ayant une longueur et une largeur qui définissent une surface de corps porteur, dans lequel corps porteur (120) une pluralité d'ouvertures de réception d'œufs à couver (11) sont prévues chacune pour recevoir un œuf à couver, et où le support d'éclosion finale (1, 101) est muni d'éléments de soutien (41-46) qui s'étendent en s'éloignant du corps porteur (120), de sorte que le support d'éclosion finale (1, 101), au moins lors du fonctionnement, puisse être placé sur des parties d'extrémité des éléments de soutien (41-46) opposées au corps porteur (120), lesdites parties d'extrémité étant ainsi situées à distance des ouvertures de réception d'œufs à couver (11) ;
- placer le nombre d'œufs fécondés (2) dans le support d'éclosion finale (1, 101) lors d'une étape préparatoire ;
- transporter le support d'éclosion finale (1, 101) contenant le nombre d'œufs fécondés (2) vers une ferme avicole, telle qu'une ferme d'élevage et/ou une ferme de viande de volaille, lors d'une étape de transport ;
où le support d'éclosion finale (1, 101) est muni de moyens d'écoulement d'air (13) conçus pour effectuer une convection par un écoulement d'air naturel le long de la pluralité d'œufs à couver (2) ; et
où le procédé comprend l'étape consistant à :
- placer le support d'éclosion finale (1, 101) contenant le nombre d'œufs fécondés (2) dans un volailler de la ferme avicole lors d'une étape d'éclosion finale, dans lequel volailler le nombre d'œufs à couver fécondés (2) sont enfin éclos.

9. Procédé selon la revendication 8, dans lequel le support d'éclosion finale est fabriqué à partir d'un matériau biologiquement dégradable.

10. Procédé selon la revendication 8 ou 9, dans lequel l'étape préparatoire se déroule avant l'étape de transport.

11. Procédé selon la revendication 8, 9 ou 10, comprenant une étape de sélection dans laquelle la pluralité d'œufs à couver (2) sont inspectés de manière à séparer la pluralité d'œufs à couver (2) en un nombre d'œufs à couver fécondés (2) et un nombre d'œufs à couver non fécondés (2).

12. Procédé selon la revendication 11, dans lequel l'étape préparatoire se déroule pendant ou immédiatement après l'étape de sélection.

13. Procédé selon l'une quelconque des revendications précédentes 8 à 12, dans lequel au moins l'une des étapes suivantes : l'étape de pré-éclosion, l'étape de sélection et l'étape préparatoire, se déroule dans un couvoir.
